# EUROPÄISCHE PATENTSCHRIFT

(11) **EP 1 104 722 B1**
(45) Veröffentlichungstag und Bekanntmachung des Hinweises auf die Patenterteilung: **18.01.2006**
(21) Anmeldenummer: 00123790.8
(22) Anmeldetag: 02.11.2000
(51) Int. Cl.: B60R 21/04, B60J 5/04, B62D 24/04, B62D 27/04

(54) **Deformationselement für den Innenraum von Kraftfahrzeugen, vorzugsweise zur Anbringung in Hohlräumen**
Deformation element for the interior of a vehicle, to be inserted in cavities in particular
Elément de déformation pour l'intérieur d'un véhicule, à insérer dans une cavité, en particulier

(30) Priorität: 03.12.1999 DE 19958299
(43) Veröffentlichungstag der Anmeldung: 06.06.2001
(73) Patentinhaber: Wilhelm Karmann GmbH, 49084 Osnabrück (DE)
(72) Erfinder: Knöthig, Holger, 49075 Osnabrück (DE); Zerull, Markus, 49084 Osnabrück (DE)
(74) Vertreter: Busse & Busse Patentanwälte

(56) Entgegenhaltungen:
- EP-A- 0 744 281
- WO-A-99/39939
- DE-A- 19 505 935
- DE-A- 19 527 333
- DE-A- 19 736 839
- FR-A- 2 774 144
- US-A- 5 435 619

## Beschreibung

Die Erfindung bezieht sich auf ein Deformationselement für den Innenraum von Kraftfahrzeugen in einer Ausgestaltung nach dem Oberbegriff des Patentanspruchs 1.

Aus der DE 198 25 040 A1 ist eine Stoßdämpfungsvorrichtung bekannt, die einen eine Karosseriesäule umgreifenden und gegenüber dieser mittels einer verformbaren Blattfederstruktur beabstandeten, im wesentlichen in Draufsicht L-förmigen Träger aufweist. Die Blattfederstruktur ist so ausgebildet, daß sie zwei um 180° gegeneinander versetzte und sich verschneidende halbkreisförmige Stegelemente aufweist, die übereinander gehalten sind, wobei die Ebene der Halbkreise im wesentlichen senkrecht zur Ebene der Fahrzeugsäule liegt. Mit einer derartigen Stoßdämpfungsvorrichtung kann lediglich einer Aufprallkraft entgegengewirkt werden, die im wesentlichen senkrecht zur Schnittlinie der beiden halbkreisförmigen Stegelemente auf die Vorrichtung einwirkt. Die Abfederung erfolgt dabei nur punktuell.

Aus der FR-A-2 774 144 ist ein Deformationselement für Kraftfahrzeuge der eingangs genannten Art bekannt, bei der die deformierbaren Bereiche wabenförmig aufgebaut sind und zwischen erhabenen Wabenbereichen durch Spalte gebildete Stauchungszonen vorgesehen sind, die bei Krafteinleitung von oben Knautschzonen darstellen. Mit einem derartigen Deformationselement kann zum überwiegenden Teil nur Aufprallkräften entgegengewirkt werden, die senkrecht von oben auf die erhabenen Bereiche der Wabenstruktur des Deformationselement wirken.

Der Erfindung liegt die Aufgabe zugrunde, ein Deformationselement der eingangs genannten Art eingehend zu verbessern, daß Verformungsbereiche über einen weiten Bereich der Umrißgestalt eines Karosserieteils überdeckt werden können.

Zur Lösung dieser Aufgabe zeichnet sich das Deformationselement der eingangs genannten Art durch die im kennzeichnenden Teil des Anspruchs 1 angegebenen Merkmale aus. Hinsichtlich wesentlicher Ausgestaltungen wird auf die Ansprüche 2 bis 5 verwiesen. Das erfindungsgemäße Deformationselement ist insgesamt über seinen Längsverlauf verformbar, so daß es einen weiten Bereich der Umrißgestalt des Karosserieteils überdecken und in diesem Bereich als Aufprallschutz wirksam werden kann. Es stehen eine große Anzahl deformierbarer Bereiche zur Verfügung, so daß Krafteinleitung an verschiedenen Stellen des Karosserieteils und aus verschiedenen Richtungen abgefangen werden können. Das Deformationselement kann somit sowohl bei einem Frontalunfall als auch bei einem Seitencrash bzw. Überschlag, wo jeweils verschiedene Anprallpunkte und Krafteinleitungsrichtungen gegeben sind, als Schutz wirksam sein.

Es ist eine hohe Stabilität des Deformationselements erreicht, da bei einem Anprall die Richtung der Krafteinleitung im wesentlichen in der Erstreckungsebene der Versteifungshäute verläuft, wenn, wie in Weiterbildung der Erfindung vorgeschlagen, zwischen einander benachbarten Wellenbergen bzw. Wellentälern dünne Versteifungshäute vorgesehen sind. Auch bei Ausbildung nur eines deformierbaren Bereiches aus einem gegenüberliegenden Wellenberg und Wellental ist durch diese Versteifungshaut auch bei unterschiedlichen Krafteinleitungsrichtungen eine gegenüber dem Stand der Technik verbesserte Stabilität, auch bei Einleitung aus unterschiedlichen Richtungen, gegeben. Besonders vorteilhaft ist hierbei, daß diese Ausgestaltung an die jeweilige Karosseriestruktur einfach anzupassen ist.

Weitere Vorteile und Merkmale ergeben sich aus in der Zeichnung dargestellten und nachfolgend erläuterten Ausführungsbeispielen des Gegenstandes der Erfindung. In der Zeichnung zeigen:

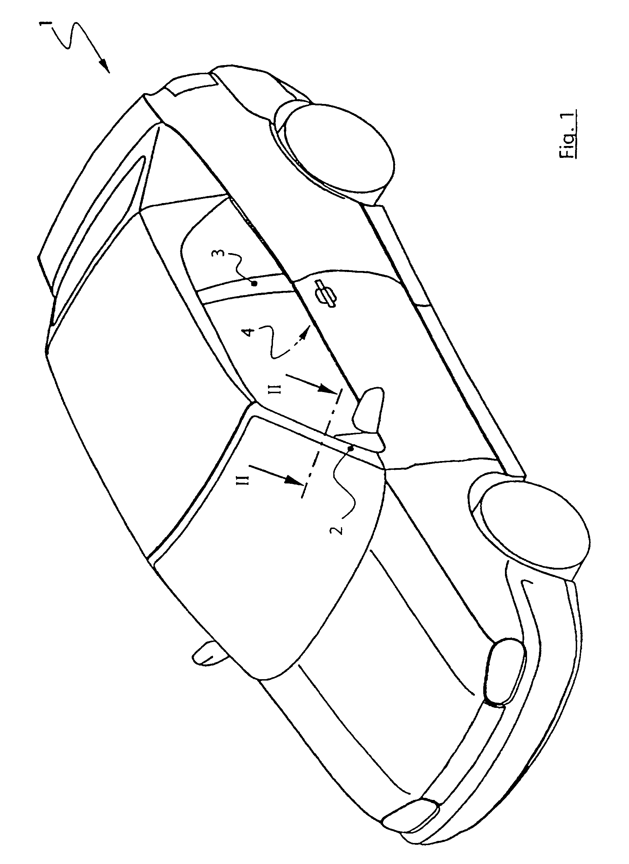

- Fig. 1: ein Kraftfahrzeug mit Karosseriesäulen, denen erfindungsgemäße Deformationselemente zugeordnet sind,
- Fig. 2: einen Schnitt entlang der Linie II-II in Fig. 1 bei Anordnung von Deformationselementen gemäß Anspruch 1,
- Fig. 3: ein Deformationselement nach Anspruch 1,
- Fig. 4: eine Ansicht aus Richtung IV auf den ersten Materialstreifen des Deformationselements nach Fig. 3,
- Fig. 5: einen Schnitt entlang der Linie V-V in Fig. 3.

Für ein Kraftfahrzeug 1, das als geschlossenes oder als Cabriolet-Fahrzeug ausgebildet sein kann und an den Innenraum angrenzende Fahrzeugkarosserieteile, etwa eine A-Säule 2, einen Überrollbügel 3 oder Türinnenteile 4 aufweist, sind je nach Ausführungsbeispiel unterschiedliche Deformationselemente 5,6,7 vorgesehen, die jeweils als Leisten ausgebildet sind und über ihre Längserstreckung L mehrere deformierbare Bereiche 12,13,14 aufweisen. Es können mehrere Deformationselemente 5,6,7 nebeneinander angeordnet werden, um damit über den Längsverlauf des Karosserieteils 2,3,4 einen vollständigen Schutz zu bieten. Die Deformationselemente 5,6,7 sind insgesamt über ihren Längsverlauf derart verformbar, daß sie um eine Fahrzeugsäule 2,3 oder Kante einer Türverkleidung 4 oder dergleichen geformtes Karosserieteil herumgelegt werden können, um somit von verschiedenen Seiten eine Zwischenlage zwischen dem Karosserieteil 2,3,4 und einer Außenverkleidung 15, die dem Fahrzeuginnenraum zugewandt ist, auszubilden. Die Verformung der Leiste 5,6,7 über ihren Längsverlauf kann entweder elastisch oder bereichsweise plastisch möglich sein. In jedem Fall ist eine Anpassung an die Form des Karosserieteils 2,3,4 erreicht. Die deformierbaren Bereiche 12,13,14 sind derart ausgebildet, daß sie im wesentlichen senkrecht zur Außenwandung des Karosserieteils 2,3,4, also parallel zu möglichen Krafteinleitungsrichtungen 9,10,11, einen Widerstand ausbilden und durch Verformung Energie absorbieren können, die der äußeren Krafteinleitung, beispielsweise durch den Anprall einer Person oder eines Gegenstandes, entgegenwirkt.

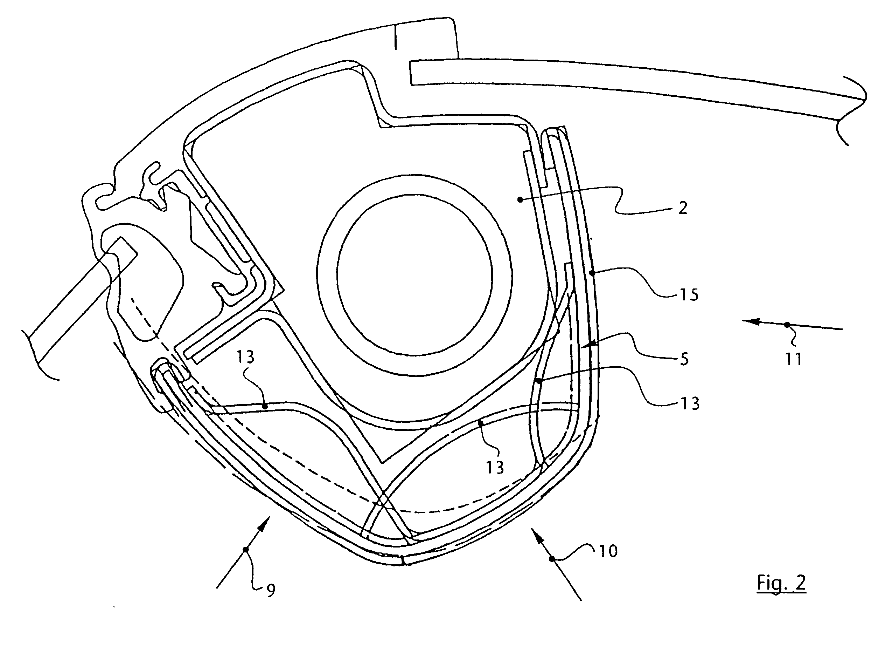

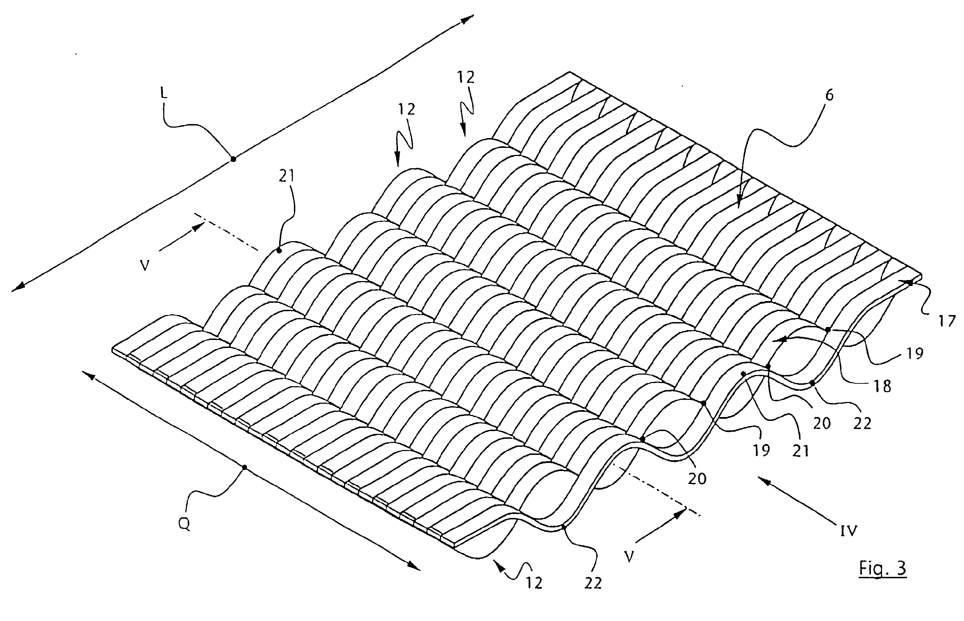

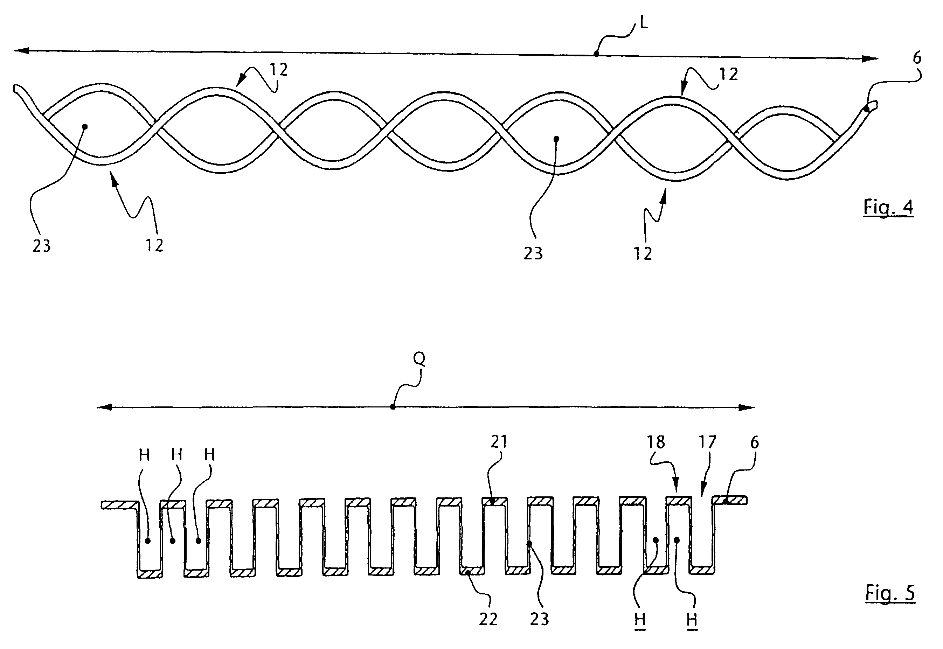

In Fig. 2 ist ein Deformationselement 5 mit nur drei deformierbaren Bereichen 13 eingezeichnet. Das in den Figuren 3 bis 5 eingezeichnete Deformationselement 6 weist erheblich mehr deformierbare Bereiche 12 auf, beispielsweise können diese jeweils eine Erstreckung von etwa 2 bis 3 cm haben, und eine Leiste kann typischerweise fünf bis acht solcher deformierbaren Bereiche 12 enthalten.

Gemäß dem in den Figuren 3 bis 5 gezeigten Ausführungsbeispiel ist das Deformationselement 6 durch mehrere parallel zueinander und parallel zur Längserstreckung L der Leiste gelegene Streifen 17,18 gebildet, die in Längsrichtung jeweils periodisch verlaufen und dabei wellenförmig gekrümmt sind. Die Streifen 17,18 sind an in ihrer Mittelebene liegenden Kreuzungspunkten 19,20 miteinander verbunden und bilden jeweils Wellenberge 21 und Wellentäler 22 aus, wobei benachbarte Streifen 17,18 eine Phasendifferenz von 180° aufweisen, d. h., daß jeweils ein Wellental 22 eines Streifens 17 auf einen Wellenberg 21 eines benachbarten Streifens 18 trifft und umgekehrt. Das Deformationselement 5 bzw. 6 kann insgesamt als einstückiges Bauteil, beispielsweise als Spritzgußteil, ausgebildet sein. Es kommen verschiedene Kunststoffe in Frage. Auch metallische Werkstoffe sind grundsätzlich möglich. Bevorzugt ist das Deformationselement 5,6,7 so ausgebildet, daß ein möglichst großer Bereich der Verformung elastisch erfolgt, d. h., daß bei leichtem Aufprall eine Regeneration des Bauteils erfolgt und dieses daher nicht dauerhaft beschädigt ist.

Zur Versteifung enthält das Deformationselement 6 die Durchgänge bzw. Freiräume zwischen den einander benachbarten Wellenbergen 21 und Wellentälern 22 jeweils verschließende dünne Versteifungshäute 23, so daß bei Sicht in Richtung des Pfeils IV kein Freiraum zwischen den Wellenbergen 21 und Wellentälern 22 verbleibt, sondern lediglich ausgefüllte Flächenbereiche. Diese bieten bei der Deformierung einen erheblichen Widerstand, so daß derartige Deformationselemente 6 gegenüber denen 5 mit freibelassenen Zwischenräumen eine größere Härte und Widerstandskraft aufweisen. Auch die Deformationselemente 6 können insgesamt als einstückiges Spritzgußteil ausgebildet sein. Derartige Deformationselemente 6 bieten auch bei nur einem Wellenberg 21 und einem Wellental 22 eine erhebliche Verbesserung gegenüber dem Stand der Technik, da sie die Deformation aus verschiedenen Richtungen abfangen können und eine erhebliche Aussteifung auch bei schräger Krafteinleitung bieten. Bevorzugt werden auch diese Deformationselemente 6 als langerstreckte Leisten ausgebildet, die mehrere deformierbare Bereiche 12 umfassen. Die Versteifungshäute 23 erstrecken sich rechtwinklig zu den Streifen 17 bzw. 18. Die Streifen 17,18 sind über die Versteifungshäute 23 fest miteinander verbunden, die Verbindung ist durchgängig über alle sich in Leistenlängsrichtung erstreckenden Streifen 17,18.

## Patentansprüche

1. Deformationselement (5;6;7) für den Innenraum von Kraftfahrzeugen (1), vorzugsweise zur Anbringung in Hohlräumen zwischen Fahrzeugkarosserieteilen (2;3;4), z. B. Fahrzeugsäulen (2;3), und einer Innenverkleidung (15), wobei eine über ihren Längsverlauf (L) verformbare und an die äußere Umrißgestalt von Karosserieteilen (2;3;4) anpassbare Leiste vorgesehen ist, die über ihren Längsverlauf (L) mehrere deformierbare Bereiche (12;13;14) aufweist, **dadurch gekennzeichnet, daß** die deformierbaren Bereiche (12;13) durch zur Leistenlängserstreckung parallel gelegene Streifen (17;18) gebildet sind, die in Längsrichtung jeweils periodisch wellenförmig gekrümmt und dabei gegeneinander so versetzt sind, daß dem Wellenberg (21) eines Leistenstreifens (17) das Wellental (22) des nächstliegenden Leistenstreifens (18) benachbart ist und umgekehrt.

2. Deformationselement nach Anspruch 1, **dadurch gekennzeichnet, daß** der oder die Durchgäng(e) bzw. Freiräum(e) zwischen dem oder den einander benachbarten Wellenberg(en) (21) und Wellentäl(ern) (22) jeweils von einer dünnen Versteifungshaut (23) ausgefüllt ist oder sind.

3. Deformationselement nach Anspruch 2, **dadurch gekennzeichnet, daß** die Versteifungshäute (23) sich rechtwinklig von den Rändern der Streifen (17;18) erstrecken und zwischen sich jeweils Hohlräume (H) von etwa Streifenbreite ausbilden.

4. Deformationselement nach Anspruche 2 oder 3, **dadurch gekennzeichnet, daß** die Streifen (17;18) über die Versteifungshäute (23) fest miteinander verbunden sind und damit eine durchgängige Verbindung aller sich in Leistenlängsrichtung (L) erstreckenden Streifen (17;18) besteht.

5. Deformationselemement nach einem der Ansprüche 1 bis 4, **dadurch gekennzeichnet, daß** das Deformationselement (5;6;7) über seinen Längsverlauf (L) in eingebauter Stellung sich im wesentlichen halbkreisförmig um eine Fahrzeugsäule (2;3) erstreckt.

## Claims

1. Element for deformation (5,6,7) for the interior of motor vehicles (1), preferably for mounting in cavities between parts (2,3,4) of the vehicle bodywork and an inner lining (15), a strip being provided which is deformable over its longitudinal extent (L), which can be matched to the outer outline shape of parts (2,3,4) of the bodywork, and which has a plurality of deformable regions (12,13,14) along its longitudinal extent (L), **characterised in that** the deformable regions (12,13) are formed by fillets (17,18) positioned parallel to the longitudinal extent of the strip, which fillets (17,18) are each curved in a cyclically undulating shape in the longitudinal direction and at the same time are offset from one another in such a way that the crest (21) of an undulation in one fillet (17) of the strip has adjacent to it the trough (22) of an undulation in the immediately adjoining fillet (18) of the strip, and vice versa.

2. Element for deformation according to claim 1, **characterised in that** the passage(s) or free space(s) between the crest(s) (21) and trough(s) (22) of an undulation or of undulations is or are each filled in by a thin stiffening skin (23).

3. Element for deformation according to claim 2, **characterised in that** the stiffening skins (23) extend at right angles from the edges of the fillets (17,18) and in each case form, between them, cavities (H) of approximately the width of the fillets.

4. Element for deformation according to claim 2 or 3, **characterised in that** the fillets (17,18) are connected solidly together by means of the stiffening skins (23) and a continuous connection thus exists between all the fillets (17,18) extending in the longitudinal direction (L) of the strip.

5. Element for deformation according to one of claims 1 to 4, **characterised in that**, in the fitted position, the element (5,6,7) for deformation extends around a pillar (2,3) of the vehicle substantially in a semicircle over its longitudinal extent (L).

## Revendications

1. Elément déformable (5 ; 6 ; 7) pour l'intérieur de véhicules automobiles (1), de préférence pour montage dans des espaces creux entre des parties de carrosserie de véhicule (2 ; 3 ; 4), par exemple des colonnes de véhicule (2 ; 3), et un habillage intérieur (15), compressant une baguette déformable sur sa longueur (L), adaptable au contour extérieur d'éléments de carrosserie (2 ; 3 ; 4) et présentant sur sa longueur (L) plusieurs zones déformables (12 ; 13 ; 14),
**caractérisé en ce que**
les zones déformables (12, 13) sont formées par des bandes (17 ; 18) parallèles à la longueur de la baguette et qui en direction longitudinale sont chacune périodiquement courbées en forme d'onde et décalées les unes par rapport aux autres, de sorte qu'un sommet d'onde (21) d'une bande de baguette (17) avoisine le fond d'onde (22) de la bande de baguette (18) suivante et inversement.

2. Elément déformable selon la revendication 1,
**caractérisé en ce que**
le ou les passage(s) ou espace(s) libre(s) entre le(s) sommet(s) d'onde (21) et fond(s) d'onde (22) voisin(s) est (sont) respectivement rempli(s) par une peau de raidissement (23) mince.

3. Elément déformable selon la revendication 2,
**caractérisé en ce que**
les peaux de raidissement (23) s'étendent à angle droit des bords des bandes (17 ; 18) et forment entre elles respectivement des espaces creux (H) d'une largeur correspondant sensiblement à celle d'une bande.

4. Elément déformable selon la revendication 2 ou 3,
**caractérisé en ce que**
les bandes (17 ; 18) sont reliées fermement les unes aux autres par les peaux de raidissement (23) pour ainsi obtenir une liaison de toutes les bandes (17 ; 18) continue dans la direction longitudinale (L) des baguettes.

5. Elément déformable selon l'une quelconque des revendications 1 à 4,
**caractérisé en ce que**
l'élément de déformation (5 ; 6 ; 7) en position montée s'étend sur sa longueur (L) pour l'essentiel en forme de demi-cercle autour d'une colonne de véhicule (2 ; 3).
